Europäisches Patentamt

European Patent Office

Office européen des brevets

(19)

(11) Numéro de publication: **0 148 756 B1**

# (12) FASCICULE DE BREVET EUROPÉEN

(45) Date de publication du fascicule du brevet:
08.03.89

(21) Numéro de dépôt: **85101378.9**

(22) Date de dépôt: **05.06.81**

(51) Int. Cl.⁴: **F 24 J 3/00**, F 25 B 15/06

(54) Système pour la revalorisation d'énergie thermique à bas niveau mettant en oeuvre des phénomènes d'évaporation et de mélange de deux fluides en équilibre de pression de vapeur sous des températures différentes.

(30) Priorité: 11.06.80 FR 8017676
16.07.81 FR 8113846

(43) Date de publication de la demande:
17.07.85 Bulletin 85/29

(45) Mention de la délivrance du brevet:
08.03.89 Bulletin 89/10

(84) Etats contractants désignés:
BE DE GB LU NL SE

(56) Documents cité:
EP-A-0 001 296
EP-A-0 026 257
DE-A-1 444 337
DE-A-2 648 855
FR-A-453 183
FR-A-675 258
FR-A-1 056 314
FR-A-2 180 526
FR-A-2 274 564
GB-A-372 339
US-A-2 162 607
US-A-2 182 453
US-A-4 223 535

ASHRAE JOURNAL, vol. 5, no. 7, juillet 1963, pages 24-34; R. ZITO Jr.: "Heat pump utilizing the latent heat of dissolution; a two-component system"

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **Le Goff, Pierre,, 22, rue de la Croix Gagnée, F-54000 Nancy (FR)**

(74) Mandataire: **Lerner, François, 5, rue Jules Lefèbvre, F-75009 Paris (FR)**

## Description

La présente invention a pour objet un système permettant la valorisation et le stockage d'énergie thermique à bas niveau mettant en oeuvre des phénomènes d'évaporation et de mélange de deux fluides en équilibre de pression dé vapeur sous des températures différentes.

On sait que deux fluides de nature différente peuvent être en équilibre de pression de vapeur sous des températures différentes. Ainsi par exemple, un ballon contenant de l'eau pure et un ballon contenant une solution dans l'eau d'un sel tel que chlorure de lithium, chlorure de calcium ou d'une substance telle que soude, acide sulfurique, gaz ammoniac, ne sont en équilibre de vapeur qu'à des températures différentes. Ainsi, par exemple, la pression de vapeur de l'eau pure à 20°C est sensiblement égale à celle d'une saumure saturée de chlorure de calcium à 50°C et celle d'une solution saturée de chlorure de lithium à 70 - 80°C ou d'une solution d'acide sulfurique, de soude ou de chlorure de zinc vers 120°C.

Il est possible de mettre à profit ce phénomène pour faire "bouillir" à basse température un liquide que l'on appellera "solvant" tel que de l'eau, en utilisant comme condenseur un volume dans lequel est maintenu à température plus élevée un mélange formé par dissolution dans le solvant d'un autre corps, que l'on appellera "soluté", qui a la propriété d'abaisser la pression de vapeur du solvant. On peut faire travailler la vapeur dans une turbine. On peut également mettre à profit la différence de températures des solutions pour lesquelles il y a équilibre de vapeur pour transférer des calories apportées à bas niveau au solvant liquide et les récupérer à un niveau plus élevé, c'est-à-dire une température plus élevée, dans la solution obtenue par mélange, l'énergie "noble" nécessaire étant apportée par l'augmentation d'entropie du système lors du mélange dù solvant à la solution concentrée de soluté pour former une solution diluée. Par abréviation, la solution concentrée sera appelée "saumure" et la solution diluée résultant du mélange de la solution concentrée et du solvant sera appelée "diluat". La solution concentrée pourra éventuellement aller jusqu'à être du soluté pur.

Pour que le système fonctionne de façon continue, il faut lui apporter ou régénérer en permanence le solvant (eau par exemple) et le soluté (sel ou autre corps: chlorure de calcium par exemple) nécessaires à l'opération.

Il s'agit en somme d'une "pompe à chaleur" d'un type nouveau: l'énergie noble nécessaire au fonctionnement de la pompe est fourni par l'effet de dilution d'une certaine quantité de soluté dans du solvant.

L'invention propose un système permettant notamment une revalorisation effective et très économique d'énergie thermique à bas niveau particulièrement bien adaptée au chauffage des bâtiments.

L'invention permet également une revalorisation particulièrement élégante et efficace des rejets thermiques à bas niveau de toutes natures, tels que rejets thermiques de centrales nucléaires ou autres, rejets thermiques d'usines, eaux usées, etc. L'invention permet également la valorisation et le stockage de longue durée d'énergies diluées et intermittentes telles que l'énergie solaire et l'énergie du vent froid.

L'invention permet également d'utiliser l'énergie "ambiante" des masses d'eau telles que eaux de rivières, lacs et mers, et eaux d'origine géothermique.

On connaît des machines frigorifiques à absorption et également des pompes à chaleur utilisant des phénomènes d'évaporation et de condensation de deux fluides en équilibre de pression à des températures différentes.

Le brevet GB-A-372 339 décrit essentiellement une machine frigorifique à absorption utilisant comme source de refroidissement un condenseur à air à la température ambiante. Un générateur par exemple électrique ou à gaz permet la régénération d'une solution d'absorption laquelle est utilisée à l'intérieur d'un volume thermiquement isolé de l'extérieur pour favoriser l'évaporation d'une solution frigorigène à vaporiser qui diluera la solution d'absorption et empruntera sa chaleur de vaporisation à la paroi intérieure de la chambre à refroidir. On évite autant que faire se peut dans cette installation les échanges thermiques entre les parois en regard d'évaporation et de condensation en prévoyant éventuellement une isolation thermique de liège ou autre et en outre on remplit le volume dans lequel s'effectue la vaporisation du fluide frigorigène d'un gaz neutre tel qu'air ou gaz rare réduisant les échanges thermiques.

Les surfaces d'évaporation de la solution frigorigène à vaporiser et d'absorption sont disposées à des distances relativement proches, le meilleur compromis devant être trouvé pour réduire les échanges de chaleur entre les deux surfaces en regard tout en n'allongeant pas trop le trajet des vapeurs devant se condenser.

Le brevet prévoit en outre le fonctionnement de l'installation en sens inverse par inversion des circuits.

Dans le brevet principal EP-A-0 046 112 on a décrit un groupement avantageux de dispositifs évaporateurs- mélangeurs travaillant en cascade permettant de remonter par paliers le niveau thermique d'utilisation de la chaleur revalorisée puisée dans une source disponible à niveau plus bas.

Pour son fonctionnement en continu, l'installation requiert la régénération des solutions de départ, saumure-diluat à partir de leur mélange.

On connaît des dispositifs formant évaporateurs- séparateurs permettant de séparer en ses constituants de départ des solutions mélangées, par exemple pour la fabrication d'eau douce à partir d'eaux saumâtres.

En particulier, la demande de brevet allemand DE-A-1 444 337 décrit un évaporateur comprenant plusieurs chambres d'évaporation-condensation montées empilées en série et travaillant sous des températures et pressions décroissantes. Il n'est pas question dans ce document d'extraire de la chaleur à une source à plus bas niveau.

La présente invention quant à elle concerne plus spécifiquement un système regroupant de façon particulière des évaporateurs-mélangeurs et des évaporateurs-séparateurs permettant dans de bonnes conditions économiques le chauffage et la climatisation (refroidissement) de bâtiments en tirant notamment profit de sources d'énergie disponible à un niveau habituellement difficilement utilisable.

De façon précise, l'invention concerne un système pour la valorisation d'énergie thermique disponible à bas niveau pour le chauffage ou la climatisation de bâtiments, comprenant:

- au moins un dispositif formant évaporateur-mélangeur, constitué d'une première plaque d'évaporation et d'une première plaque de condensation disposée à faible distance et de préférence sensiblement en regard de la première plaque d'évaporation, la face intérieure de la première plaque d'évaporation formant la surface d'évaporation d'un premier liquide et la face intérieure de la première plaque de condensation formant une surface de condensation sur laquelle la vapeur formée du premier liquide se condense et se mélange à un deuxième liquide, et

- au moins un dispositif formant évaporateur-séparateur constitué d'une deuxième plaque d'évaporation et d'une deuxième plaque de condensation disposée à faible distance et de préférence sensiblement en regard de la deuxième plaque d'evaporation, la face intérieure de la deuxième plaque d'évaporation formant une surface d'évaporation du premier liquide à partir d'un mélange du premier et du deuxième liquide et la face interne de la deuxième plaque de condensation formant une surface de condensation de la vapeur formée du premier liquide, l'évaporateur-séparateur servant à reconstituer, à partir du mélange de condensats de la vapeur du premier liquide avec ledit second liquide qu'il reçoit dudit évaporateur-mélangeur, lesdits premier et second liquides, l'évaporateur-mélangeur et l'évaporateur-séparateur étant associés de telle façon que:

en cas de chauffage, la face extérieure de la première plaque d'évaporation est chauffée par ladite énergie thermique à bas niveau, tandis que la face extérieure de la deuxième plaque d'évaporation est chauffée par ladite énergie thermique à bas niveau ou par toute énergie thermique disponible à niveau plus élevé, la face extérieure de la première plaque de condensation dégage une énergie thermique à un niveau revalorisé par rapport audit bas niveau, et la face extérieure de la deuxième plaque de condensation est refroidie par une source extérieure de froid disponible à un niveau inférieur au niveau de chauffage de ladite deuxième plaque d'évaporation, et

en cas de climatisation, la face extérieure de la première plaque de condensation ainsi que la face extérieure de la deuxième plaque de condensation sont refroidies par ladite énergie thermique à bas niveau, la face extérieure de la première plaque d'évaporation absorbe une énergie thermique à un niveau abaissé par rapport audit bas niveau, et la face extérieure de la deuxième plaque d'évaporation est chauffée par une source thermique à un niveau plus élevé par rapport audit bas niveau.

En association avec les dispositifs évaporateurs- mélangeurs, les dispositifs évaporateurs-séparateurs permettent de séparer ou reconstituer par les techniques d'évaporation et de condensation à partir de la solution diluée (diluat) ledit solvant liquide et ladite solution concentrée (saumure) pour permettre le fonctionnement autonome et illimité du système. En tirant le meilleur parti des diverses sources disponibles de chaleur ou de froid et également l'exploitation pour le chauffage ou pour la climatisation (refroidissement) de bâtiments de sources thermiques à bas niveau généralement disponibles en grandes quantités mais peu exploitables.

Avantageusement, les dispositifs évaporateurs-séparateurs utilisés auront une structure à surface d'évaporation et de condensation semblable ou identique à celle des dispositifs évaporateurs-mélangeurs susmentionnés.

Il apparaît immédiatement que l'utilisation en association des évaporateurs-mélangeurs et des évaporateurs- séparateurs permet de faire fonctionner ces dispositifs de façon discontinue, indépendamment les uns des autres et en particulier de façon non simultanée. Ceci est avantageux en ce que dans certaines conditions, on pourra par exemple faire fonctionner les évaporateurs-séparateurs grâce à l'énergie solaire lorsqu'elle est disponible, et faire fonctionner les évaporateurs-mélangeurs lorsqu'on aura besoin par exemple de chaleur pour chauffer une habitation et tout particulièrement lorsque l'énergie solaire fait ·défaut.

En associant au système une ou plusieurs cuves de stockage de la saumure, du diluat et du solvant, il devient ainsi possible de stocker, à la température ambiante, et sans avoir à prendre aucune précaution spéciale, l'énergie "noble" accumulée pendant les heures d'ensoleillement, notamment d'été, et d'utiliser cette énergie noble dans les dispositifs évaporateurs-mélangeurs pour chauffer un bâtiment pendant les heures froides et notamment la période d'hiver en empruntant le flux d'énergie principal à une "source froide" disponible telle par exemple qu'une eau environnante, une eau de rejet industriel ou de centrale ou encore l'air ambiant.

L'invention se rapporte également à un système caractérisé en ce qu'on utilise des évaporateurs-mélangeurs pour réchauffer le bâtiment sur ses surfaces intérieures et des évaporateurs-séparateurs pour reconstituer la solution de travail sur ses surfaces extérieures froides, les évaporateurs-mélangeurs et les évaporateurs-séparateurs étant ainsi disposés qu'ils sont mis en contact par leurs surfaces en regard, lesquelles constituent respectivement la première plaque d'évaporation de l'évaporateur-mélangeur et la deuxième plaque d'évaporation de l'évaporateur- séparateur, avec la source d'énergie thermique à bas niveau dans laquelle sera puisée la chaleur nécessaire au fonctionnement du système.

L'invention concerne également un système caractérisé en ce qu'on utilise des évaporateurs-mélangeurs pour climatiser le bâtiment sur ses surfaces intérieures et des évaporateurs-séparateurs pour reconstituer la solution de travail sur ses surfaces extérieures chauffées audit niveau plus élevé, les évaporateurs-mélangeurs et les évaporateurs-séparateurs étant ainsi disposés qu'ils sont mis en contact par leurs surfaces en regard, lesquelles constituent respectivement la première plaque de condensation de l'évaporateur-mélangeur et la deuxième plaque de condensation de l'évaporateur- séparateur avec ladite source d'énergie thermique à bas niveau dans laquelle sera absorbée la chaleur nécessaire au fonctionnement du système.

On notera qu'une telle conception est parfaitement bien adaptée aux besoins de la climatisation des bâtiments, le dispositif étant d'autant plus efficace que les conditions climatiques seront plus rigoureuses. En d'autres termes, plus le froid extérieur sera vif, plus le panneau chauffant sera susceptible de chauffer, tandis qu'inversement, plus la chaleur extérieure sera élevée, plus sera grande la puissance de réfrigération du panneau.

Ainsi, selon un système préféré de climatisation d'un bâtiment utilisant des dispositifs évaporateurs- mélangeurs montés en série conformes à l'invention, on pourra utiliser la source d'énergie à bas niveau dont on dispose pour faire fonctionner certains dispositifs précités pour remonter la température du fluide caloporteur sortant du dispositif par rapport à celle de ladite source, et chauffer certaines parties du bâtiment, et on pourra utiliser la source d'énergie à bas niveau dont on dispose pour faire fonctionner d'autres dispositifs précités pour abaisser la température du fluide caloporteur sortant du dispositif par rapport à celle de ladite source et pour réfrigérer d'autres parties du bâtiment, ladite source d'énergie étant utilisée dans un étage intermédiaire d'évaporateur-mélangeur.

On obtient ainsi une climatisation intégrée du bâtiment, les besoins en froid servant partiellement à satisfaire les besoins en chaud du bâtiment, tandis que simultanément, on obtient de façon très économique les besoins de réfrigération (chambre froide) voulus.

L'invention se rapporte en outre à l'application du système ci-dessus décrit à la valorisation d'une énergie thermique noble, telle que celle libérée par la combustion d'un combustible solide, liquide ou gazeux ou encore par de l'énergie électrique.

Si l'on considère un système classique de production d'eau chaude, par exemple à 50°C, pour l'usage sanitaire ou le chauffage d'une habitation utilisant dans une chaudière individuelle la dégradation d'une énergie thermique noble telle que celle libérée par la combustion d'un combustible solide, liquide ou gazeux ou encore par de l'énergie électrique, une telle utilisation de l'énergie constitue au niveau du deuxième principe de la thermodynamique une aberration et un gaspillage inacceptables. En effet, utiliser de l'énergie libérable à 1200°C ou plus pour chauffer de 20 à 50°C environ de l'eau conduit à la dégradation de pratiquement toute la "valeur" de l'énergie noble.

Ce problème n'est pas passé inaperçu des thermodynamiciens qui ont notamment proposé, notamment dans le cas de la combustion de fuel ou de gaz d'utiliser cette combustion dans un moteur de façon à produire de l'énergie mécanique noble et de la chaleur. Eventuellement, l'énergie mécanique noble peut être utilisée pour l'entraînement de "pompes à chaleur" qui permettent, si le seul but de l'installation est de fournir de la chaleur, d'améliorer notablement le rendement thermique du cycle. L'inconvénient de ces systèmes est qu'ils'sont très compliqués, qu'ils exigent des frais de maintenance importants et qu'ils sont sujets à usure plus particulièrement en ce qui concerne les moteurs à combustion interne qu'on y utilise. En outre, les calculs montrent que dans les meilleurs des cas, on ne dépasse guère un rendement de 150 % par rapport à celui-du pouvoir calorifique inférieur (PCI) du combustible qui serait directement utilisé pour produire la chaleur requise. Dans de nombreux cas, le rendement tombe en dessous de 130 % ou ne dépasse guère 100 %.

Lorsque l'énergie noble est présente sous forme d'électricité disponible, il est également connu d'utiliser cette électricité pour entraîner des "pompes à chaleur" qui ne sont autres que des réfrigérateurs fonctionnant en sens inverse. La encore, le rendement d'utilisation dépend en grande partie des conditions d'usage et notamment de la différence de température régnant entre la source "froide" dans laquelle est puisée l'énergie et la source "chaude" à laquelle l'énergie est libérée. Pour de faibles différences de température, le rendement peut atteindre 200 %. Malheureusement, ce rendement diminue lorsque l'écart des températures entre la source froide et la source chaude augmente, ce qui est un inconvénient majeur pour les systèmes de chauffage d'habitation utilisant de telles pompes à chaleur dans lesquelles habituellement la source froide est constituée par le milieu ambiant extérieur. Cependant, l'inconvénient essentiel de ces systèmes est qu'ils mettent en oeuvre des compresseurs qui sont coûteux, relativement fragiles et sujets à usure.

L'invention permet de résoudre les difficultés susmentionnées en proposant un système de construction extrèmement simple et économique, mettant en oeuvre essentiellement des pièces statiques pratiquement non sujettes à usure, et permettant de multiplier par au moins 2, voire 3, 4 ou davantage la quantité de chaleur libérée à la température d'emploi, par rapport à la quantité de chaleur disponible à l'état noble non dégradée.

A cet effet, les perfectionnements de l'invention s'appliquent à un système du type précité utilisant une chaudière chauffée par de l'énergie noble, se caractérisant en ce que ladite chaudière est utilisée en premier lieu pour assurer le chauffage de la face extérieure de la deuxième plaque précitée d'évaporation desdits évaporateurs- séparateurs dont la deuxième plaque de condensation est mise en contact thermique avec le fluide à chauffer de l'installation. De cette façon, il est pratiquement possible de n'utiliser la "dégradation" de l'énergie noble disponible que pour former ou reconstituer des saumures, à partir des diluats, lesquelles solutions permettront d'extraire d'une source froide l'énergie thermique à plus haut niveau désirée. Cette dégradation de l'énergie noble se fera sans consommation importante d'énergie, laquelle pourra être utilisée finalement pour réchauffer à la température désirée par exemple l'eau sanitaire ou l'eau de chauffage central devant être produite, le rendement d'une telle opération étant pratiquement aussi bon que l'énergie soit libérée à un niveau très élevé, par exemple 1200°C, ou à un niveau plus bas, par exemple 55°C.

Suivant une autre caractéristique objet de l'invention, lesdits évaporateurs-mélangeurs ne sont utilisés que lorsque le besoin de chaleur nécessaire à chauffer ledit fluide primaire n'est pas satisfait par les rejets thermiques provenant de la chaudière après travail dans lesdits évaporateurs-séparateurs, les solutions concentrées (saumures) formées et non utilisées étant stockées en vue d'une utilisation ultérieure. Il apparaît ainsi qu'avec une installation de puissance nominale relativement faible, il est possible de libérer instantanément et de façon durable une puissance thermique beaucoup plus importante en faisant appel à la "consommation" des saumures stockées que l'on fait travailler dans les évaporateurs-mélangeurs du système pour extraire, à partir de la source froide à bas niveau, la chaleur requise en excédent par rapport à la puissance nominale de la chaudière. Il apparaît qu'ainsi l'installation présente une très grande souplesse d'emploi. Si le corps de chauffe est un corps de chauffe électrique, la chaudière pourra fonctionner continuellement aux heures creuses lorsque l'énergie électrique est à faible prix, et cela indépendamment des besoins de la consommation. Les besoins de la consommation seront satisfaits essentiellement à partir des évaporateurs-mélangeurs dont le fonctionnement autonome sera assuré par les stockages de saumure disponibles reconstitués par la chaudière lorsqu'elle fonctionne.

L'invention, sa mise en oeuvre, ses buts et ses avantages apparaîtront plus clairement à l'aide de la description qui va suivre, faite en référence aux dessins annexés dans lesquels:
- La figure 1 montre en coupe verticale schématique, la constitution d'un évaporateur-mélangeur à un étage utilisé dans le cadre de l'invention,
- La figure 2, montre le diagramme de températures lorsqu on traverse l'évaporateur-mélangeur de la figure 1,
- La figure 3, montre comme la figure 1 un évaporateur-mélangeur comportant quatre étages montés en série,
- La figure 4, montre le diagramme de températures lorsqu'on traverse le dispositif de la figure 3,
- La figure 5, montre schématiquement un procédé climatisation d'une habitation utilisant des évaporateursmélangeurs et des évaporateurs-séparateurs conformément à l'invention,
- La figure 6, montre schématiquement l'association d'évaporateurs-mélangeurs et d'évaporateurs-séparateurs pour constituer un panneau réfrigérant, notamment pour habitations,
- la figure 7 montre, comme la figure 10, la manière de constituer un panneau chauffant associant des évaporateurs-mélangeurs et des évaporateurs-séparateurs,
- la figure 8 montre schématiquement comme les figures 10 et 11 la constitution d'un panneau réfrigérant utilisant une source de chaleur résiduaire,
- la figure 9 montre schématiquement la configuration d'un panneau refroidisseur associant des évaporateursséparateurs, des évaporateurs-mélangeurs, une source de chaleur résiduaire et une source de chaleur ambiante,
- la figure 10 montre le diagramme de températures à travers le dispositif de la figure 9,
- la figure 11 montre, comme la figure 9, la configuration d'un panneau réchauffeur associant des évaporateurs-séparateurs, des évaporateurs-mélangeurs, une source de chaleur ambiante et une source de froid,
- la figure 12 montre le diagramme de températures à travers le dispositif de la figure 11,
- la figure 13 montre schématiquement une installation utilisant en association des évaporateurs-mélangeurs montés en série et des évaporateurs-séparateurs montés en parallèle,
- la figure 14 est une vue schématique en coupe d'une installation utilisant une chaudière permettant la production d'eau chaude et la régénération de saumures dans trois étages d'évaporateurs-séparateurs disposés en série,
- la figure 15 montre le diagramme de températures aux parois de l'installation illustrée à la figure 14,

- la figure 16 est un schéma montrant le fonctionnement d'une installation pouvant être du type illustrée à la figure 14 utilisant trois évaporateurs-séparateurs en série alimentant trois évaporateurs-mélangeurs et des stockages en vue de la production d'un fluide primaire chaud,

- la figure 17 est un schéma semblable à celui de la figure 16 mais illustrant un autre groupement des évaporateurs-séparateurs et des évaporateurs-mélangeurs, utilisable notamment dans le cas de la fourniture d'un fluide primaire à température relativement élevée,

- la figure 18 est une vue schématique en coupe illustrant une installation compacte pour la production d'eau chaude utilisant essentiellement une chaudière, un évaporateur-séparateur et un évaporateur-mélangeur,

- la figure 19 montre schématiquement en coupe une autre installation compacte utilisant une construction cylindrique circulaire.

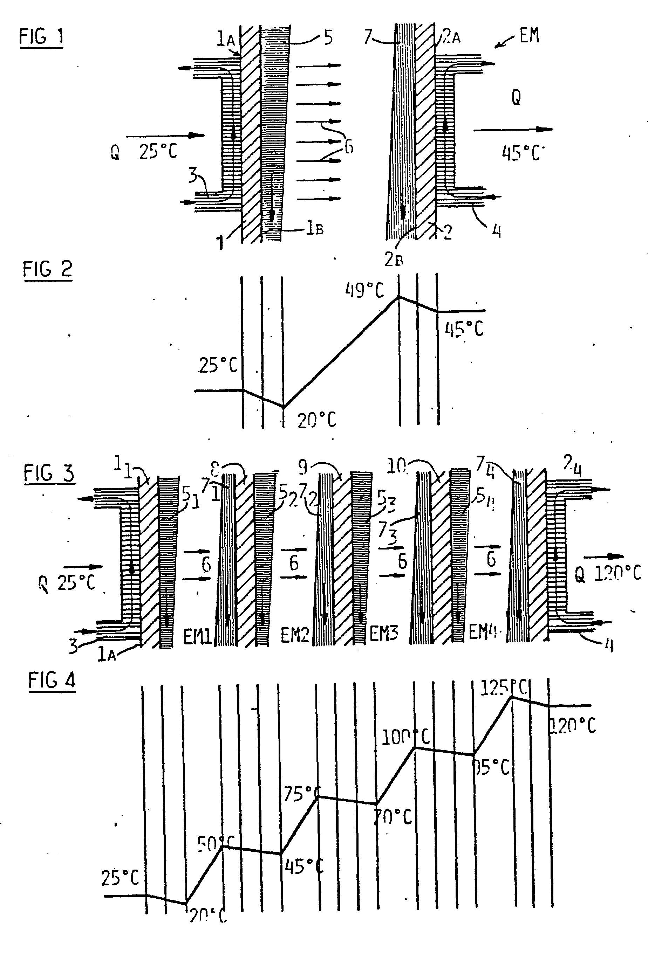

On se reportera tout d'abord à la figure 1, qui illustre un dispositif formant évaporateur-mélangeur utilisé dans le cadre de l'invention repéré dans son ensemble EM, permettant de transférer une quantité de chaleur Q empruntée à une source thermique de bas niveau dite "source froide" vers une deuxième source à température plus élevée dite "source chaude". En d'autres termes, le dispositif évaporateur-mélangeur de l'invention permet de transférer une quantité de chaleur Q disponible à une température déterminée, par exemple 25°C apportée sur une face 1 du dispositif et de la libérer après traversée du dispositif sur une deuxième face 2 à une température plus élevée, par exemple 45°C.

Dans l'exemple de réalisation illustré schématiquement, la source de chaleur disponible à bas niveau est constituée par un courant de fluide, par exemple une eau résiduaire sensiblement à la température de la "source froide", amenée par un conduit 3 en échange de chaleur avec une face (extérieure) 1a de la plaque 1 du dispositif.

La chaleur est prélevée au dispositif à la température de la "source chaude" par un fluide caloporteur, tel par exemple que de l'eau amenée par un conduit 4 en échange de chaleur avec la face (extérieure) 2a de la plaque 2 du dispositif.

Le transfert de chaleur de la plaque 1 à la plaque 2 et l'élévation du niveau thermique de la chaleur transférée se fait grâce à l'évaporation d'un film d'un fluide (solvant), tel par exemple que de l'eau douce 5 qui ruisselle en descendant le long de la face (intérieure) 1b de la plaque 1 réchauffée par le fluide 3 constituant la source de chaleur à bas niveau disponibles et par la condensation de la vapeur produite dont le transfert est schématisé par les flèches 6, sur la face (intérieure) 2b de la plaque 2 en mélange avec un second fluide ou une solution saturée d'un soluté (saumure) s'écoulant en un film mouillant la face 2b de la plaque 2.

Ce transfert de chaleur et le relèvement du niveau de la chaleur transportée sont rendus possibles par l'application des lois de la thermodynamique dès lors que le "solvant" constituant le film 5 et la "solution" constituant le film 7 sont en équilibre de tension de vapeur à des températures différentes.

L'exemple thermique représenté correspond à l'utilisation pour le film 5 d'un film d'eau douce et pour le film 7 d'une solution sensiblement saturée de chlorure de calcium dans l'eau.

La figure 2 donne exemplairement le diagramme des températures permettant d'obtenir, en tenant compte des chutes thermiques à travers les plaques minces d'échange 1 et 2, une température du fluide de sortie de 45°C avec une température de fluide d'entrée à 25°C.

Pour que le dispositif puisse fonctionner, il suffit d'alimenter la plaque 1 en fluide thermique à bas niveau 3, d'alimenter le film d'eau douce 5, d'alimenter le film de saumure 7 et de récupérer la chaleur à plus haut niveau par le fluide d'échange caloporteur 4.

Lors de ce transfert de chaleur, de l'eau douce s'évapore, qu'il faut régénérer ou rajouter en complément, et la saumure se dilue, et il faut soit apporter du sel frais, soit régénérer le sel à partir de la saumure. Bien évidemment, l'énergie "noble" qui permet de relever la température de la chaleur empruntée à la source froide est apportée par la chaleur de dissolution du sel dans l'eau.

Dans la suite de la description, et par manière de simplification, on parlera essentiellement d'eau et ce saumure, ou éventuellement de "solvant", "soluté" et de "solution"; il faut bien comprendre que l'invention peut fonctionner avec diverses sortes de solvants et de solutés, pourvu qu'il existe une chaleur de dissolution relativement importante du soluté dans le solvant, plus forte étant la chaleur de dissolution, plus grande étant la possibilité de relever en un seul étage d'évaporation-mélange le niveau thermique de la source froide. Parmi de tels couples de "solvant" et de "soluté", on peut citer notamment les couples suivants:

- eau / chlorure de lithium,
- eau / bromure de lithium,
- eau / chlorure de calcium,
- eau / soude caustique,
- eau / chlorure de zinc,
- eau / acide sulfurique,
etc.

L'utilisation de l'eau comme solvant est avantageuse en ce que l'eau est d'une part un solvant économique, et d'autre part présente une chaleur importante de vaporisation.

D'autre part, le choix du couple solvant-solution pourra être déterminé par des conditions d'utilisation locales et des critères de résistance des matériaux et de corrosion. Des additifs pourront éventuellement être ajoutés à la solution pour limiter les phénomènes de corrosion.

Si l'on veut obtenir un relèvement de température important de la source froide à la source chaude, sans faire appel à des couples solvant-soluté très corrosifs tels que eau-acide sulfurique, on peut, comme illustré aux figures 3 et 4, monter en série plusieurs évaporateurs-mélangeurs conformes à l'invention.

Ainsi, comme illustré à la figure 3, quatre évaporateurs-mélangeurs sont montés en série les uns derrière les autres.

Sur la face extérieure la de la plaque $1_1$ du premier étage d'évaporateur-mélangeur $EM_1$ est apportée la chaleur à bas niveau de la source froide dont le courant 3 apporte sa chaleur à la plaque $1_1$. Le film d'eau $5_1$ qui ruisselle le long de la plaque $1_1$ s'évapore dans le volume laissé libre entre la plaqué $1_1$ et la plaque en regard 8 sur laquelle ruisselle le film de saumure $7_1$ qui assure la dissolution et condensation de la vapeur 6 assurant simultanément le transfert de la chaleur Q et le relèvement de la température comme illustré par le diagramme de température de la figure 4. La plaque 8, par sa face en regard avec la plaque $1_1$, forme surface de condensation de la vapeur, et par son autre face, forme face d'évaporation du film d'eau $5_2$ du deuxième étage d'évaporateur-mélangeur $EM_2$.

Tout se passe dans le deuxième étage $EM_2$ comme dans le premier étage, à ceci près que le film d'eau $5_2$ est évaporé dans le second évaporateur-mélangeur $EM_2$ à une température plus élevée que celle à laquelle le film d'eau $5_1$ est évaporé dans le premier étage $EM_1$. Dans l'exemple illustré on a supposé un relèvement très modeste de 25° C initial à 45° C au niveau du film $5_2$.

La vapeur du film $5_2$ produite est dissoute et condensée à température plus élevée, soit dans l'exemple illustré 75° C, dans le film de saumure $7_2$ qui ruisselle le long de la face en regard de la plaque suivante 9 formant plaque de condensation du second étage $EM_2$ par une de ses faces et plaque d'évaporation du troisième étage $EM_3$ par son autre face.

De proche en proche, en quatre étages, on peut très facilement, avec un couple eau/solution de chlorure de calcium obtenir un relèvement de température de la chaleur Q empruntée à la source froide 3 de 25° C à 120° C, récupérée par le fluide caloporteur 4 qui recueille la chaleur sur la face extérieure de la dernière plaque 24 de l'évaporateur-mélangeur $EM_4$.

Bien entendu, les pressions dans chaque étage $EM_i$ seront ajustées à la valeur correspondant sensiblement à l'équilibre des pressions de vapeur du couple eau/solution saline aux températures envisagées de chaque étage.

Les différences de pression entre les faces extérieures $1_1$ et $2_4$ du système pourront être facilement encaissées en prévoyant (non représentées) quelques entretoises entre les plaques successives $1_1$, 8, 9, 10, $2_4$. On proposera du reste ci-après notamment en relation avec les figures 21 à 25 d'autres structures de conception très simple et rigide.

On notera enfin que les évaporateurs-mélangeurs seront d'autant plus efficaces et d'autant moins encombrants que l'intervalle entre les plaques en regard d'évaporation et de condensation sera réduit, de telle sorte que le transfert de la vapeur, illustré par les flèches 6, pourra être très efficace. Avec un tel dispositif, on peut escompter raisonnablement obtenir des densités de flux de transfert de chaleur de l'ordre de 20 à 30 kw/$m^2$ et davantage.

Pour reconstituer les solutions concentrées (saumures) à partir des solutions diluées (diluats), on utilise un évaporateur-séparateur ayant une structure semblable ou identique à celle des évaporateurs-mélangeurs EM ci-dessus décrits, mais fonctionnant en quelque sorte en sens inverse.

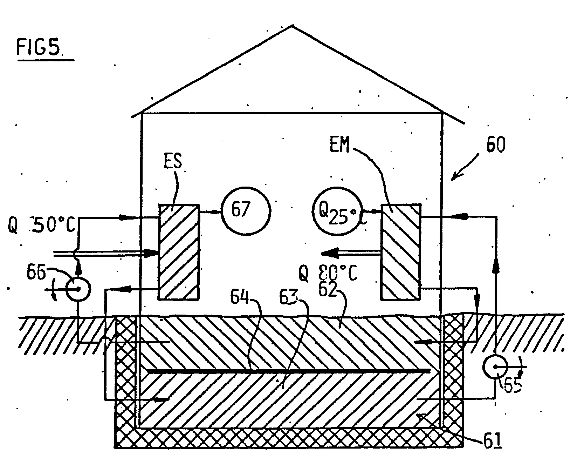

On se reportera maintenant à la figure 5 illustrant l'adaptation de dispositifs évaporateurs-séparateurs et évaporateurs-mélangeurs conformes à l'invention à la climatisation d'une habitation.

A la figure 5, on a schématisé un bâtiment 60 dans lequel on a installé un évaporateur-mélangeur EM (ou mieux une batterie de tels évaporateurs-mélangeurs montés en série) et un évaporateur-séparateur ou une batterie de tels évaporateurs-séparateurs montés en série.

A proximité de l'habitation, et avantageusement sous elle, on a prévu une cuve de stockage 61 dans laquelle on stocke en partie supérieure en 62 la solution diluée (diluat), et en partie inférieure en 63 la solution concentrée (saumure). La séparation des deux solutions peut se faire par simple stratification. On peut également prévoir entre les deux solutions une paroi flottante de séparation 64, ou l'on peut encore enfermer l'une des solutions ou les deux dans des enveloppes souples formant baudruches de volume variable suivant la quantité de chaque solution.

Si l'on veut chauffer le bâtiment, il suffit d'apporter de la chaleur à bas niveau, par exemple à 25° C à l'évaporateur-mélangeur, cette chaleur à bas niveau pouvant être empruntée à des eaux résiduaires par exemple. L'évaporateur-mélangeur permettra de transférer dans le bâtiment sensiblement la même quantité de chaleur mais à une température plus elevée, par exemple à 80° C, pourvu que l'on apporte à l'évaporateur-mélangeur la quantité de solution saline concentrée nécessaire à son fonctionnement. Cette quantité est puisée par la pompe 65 en le volume 63 du réservoir 61. Evidemment, lorsqu'on fournit à l'évaporateur-mélangeur une solution saline concentrée soutirée dans la réserve 63, on produit simultanément une solution saline diluée (de volume un peu supérieur) que l'on stocke dans le réservoir 62.

Par condition d'ensoleillement favorable, et notamment en été, on pourra fournir à l'évaporateur-séparateur ES la quantité de chaleur à niveau convenable, par exemple à 50° C qui permettra de reconstituer à partir de la solution saline diluée la solution saline concentrée. Dans de telles conditions, il suffira de mettre en route la pompe 66 qui amènera la solution saline diluée puisée dans le réservoir 62 à la batterie d'évaporateurs-séparateurs produisant la solution saline concentrée délivrée au réservoir 63. Simultanément, de l'eau douce sera produite en 67.

L'évporateur-séparateur pourra également fonctionner si désiré au moyen de toute source de chaleur résiduaire, voire de chaleur électrique aux heures creuses.

Sur le plan pratique, les installations restent raisonnables, car tout se passé comme si on réalisait un chauffage des habitations à la saumure en considérant un pouvoir calorifique de saumure voisin du vingtième de celui du fuel domestique avec possibilité de régénération de la saumure et son stockage de longue durée chaque fois qu'on dispose d'énergie en surplus.

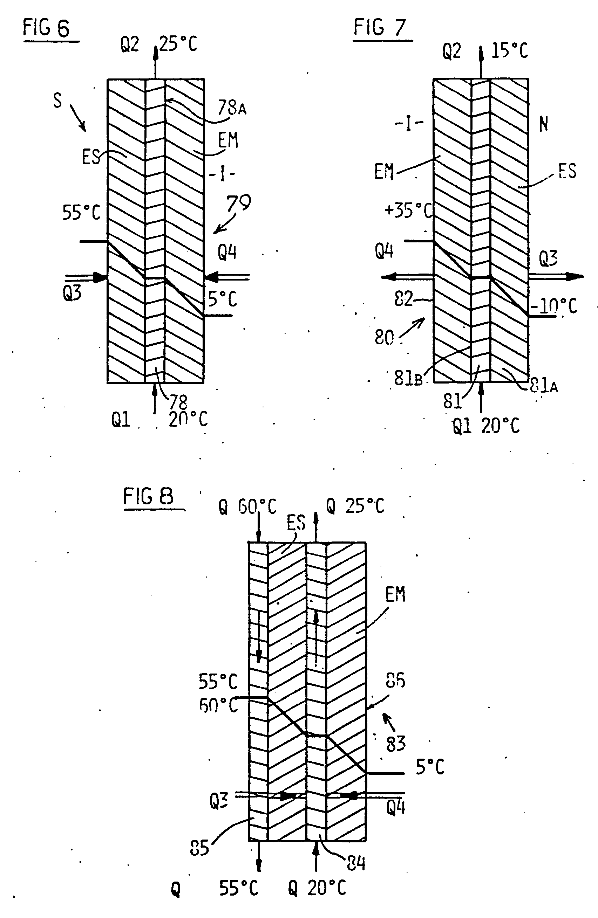

On se reportera maintenant à la figure 6 qui décrit un mode de réalisation d'un panneau réfrigérant 79 particulièrement bien adapté à des bâtiments.

Le panneau comprend un évaporateur-mélangeur EM et un évaporateur-séparateur ES séparés par un volume 78 parcouru par un fluide, tel que de l'eau par exemple, à température ordinaire ambiante, par exemple de 20°C.

En supposant que l'évaporateur-séparateur ES est exposé en face sud S du bâtiment au rayonnement solaire, sa surface extérieure peut être portée par exemple vers 55°C. Il est donc possible dans cet évaporateur-séparateur de fabriquer à partir d'une solution diluée de sel, un solution concentrée, l'eau douce évaporée se condensant à la température de la source froide (ici supposée égale à 20°C).

A partir de la saumure concentrée fabriquée par l'évaporateur-séparateur, il est possible de faire fonctionner l'évaporateur-mélangeur EM en utilisant comme surface d'évaporation froide de d'évaporateur-mélangeur la face I intérieure au bâtiment, la vapeur d'eau condensée étant recueillie en mélange avec la solution concentrée saline sur la face chaude de condensation 78a de l'évaporateur-mélangeur EM en contact avec le volume 78 (vers 20°C dans l'exemple illustré).

Avec un tel panneau intégrant un seul étage d'évaporateur-mélangeur et un seul étage d'évaporateur-séparateur fonctionnant avec de l'eau et de la saumure, il est possible d'obtenir aisément une température de la face intérieure I du panneau voisine de 5°C.

On notera qu'un tel panneau réfrigérant est d'autant plus efficace que la surface extérieure soumise au rayonnement S solaire sera plus chaude, ce qui est idéal, la réfrigération étant d'autant plus efficace que la chaleur extérieure est plus intense.

On décrira maintenant, en relation avec la figure 7, la réalisation d'un panneau chauffant 80 fonctionnant en quelque sorte de manière inverse à celle du panneau réfrigérant de la figure 6.

Ce panneau comporte, comme le panneau réfrigérant 79, un évaporateur-mélangeur EM et un évaporateur-séparateur ES.

Comme dans l'exemple précédent, c'est l'évaporateur- séparateur ES qui est exposé par une de ses faces à l'extérieur du bâtiment, mais cette fois, sur la façade la plus froide, par exemple la façade nord que l'on supposera portée à -10°C. Cette face de l'évaporateur-séparateur est évidemment la face "froide", tandis que la face chaude est constituée par la paroi 81 formant le centre du panneau chauffant 80, laquelle paroi est maintenue à une température voisine de 20°C par un fluide, tel que de l'eau, constituant la source de chaleur à bas niveau dont on dispose. Dans l'exemple illustré, on a supposé qu'un flux de chaleur $Q_1$ était fourni' à 20°C au panneau 81, le fluide caloporteur étant supposé quitter le panneau à une température abaissée à 15°C comme Indiqué en $Q_2$. La différence de température entre la face "chaude" portée vérs 20°C de l'évaporateur ES et sa face "froide" portée vers -10°C exposée au vent froid du nord, permet le fonctionnement de l'évaporateur- séparateur et la fabrication d'une solution concentrée à partir d'une solution diluée. L'évaporateur-séparateur ES fonctionne d'autant plus efficacement que la source "froide" est à température plus basse.

Tandis que par sa face 81a, la paroi 81 formant échangeur de chaleur alimentée par le fluide thermique à bas niveau, constitue la paroi chauffante de l'évaporateur ES, par sa paroi opposée 81b, l'échangeur 81 forme partie froide de l'évaporateur-mélangeur EM.

La face chaude 82 de l'évaporateur-mélangeur EM est dirigée vers l'intérieur I du bâtiment. Si la paroi 81b est à environ 15 - 20°C, on peut obtenir facilement avec un seul étage d'évaporateur-mélangeur et utilisation d'une saumure une température de la face 82 voisine de 35°C.

C'est à cette température qu'est introduit dans le bâtiment le flux de chaleur $Q_4$.

En comparant les figures 6 et 7, on constate que le panneau réfrigérant de la figure 6 permet en quelque sorte de "pomper" dans le fluide thermique à bas niveau dont on dispose la chaleur que l'on veut éliminer $Q_3$, $Q_4$ sur les deux faces du panneau à deux niveaux de températures différents, tandis que dans le cas du panneau chauffant de la figure 7, on extrait du fluide thermique à bas niveau dont on dispose les quantités de chaleurs $Q_3$ et $Q_4$, la chaleur $Q_3$ à plus bas niveau étant éliminée à l'extérieur, la chaleur $Q_4$ à niveau plus élevé servant à chauffer le bâtiment.

Selon le mode de réalisation illustré et schématisé à la figure 8, on à représenté un panneau refroidisseur 83 composé essentiellement d'un échangeur-mélangeur EM, d'un échangeur-séparateur ES et de deux échangeurs de chaleur 84, 85 alimentés respectivement par une source de chaleur "ambiante" par exemple à 20°C, et par une source de chaleur résiduaire par exemple à 60°C. Sur la figure, on a indiqué les diverses températures pouvant exister à chaque endroit.

Le fonctionnement de ce panneau est tout à fait semblable à celui de la figure 6, à ceci près que la chaleur $Q_3$ est apportée à l'évaporateur-séparateur ES non pas par le rayonnement solaire auquel le panneau était exposé à la figure 6, mais par l'échangeur de chaleur 85 utilisant le fluide de chaleur résiduaire vers 60°C dont on suppose disposer.

Dans l'exemple illustré, l'évaporateur-séparateur et l'évaporateur-mélangeur ont un seul étage et fonctionnent avec des solutions aqueuses salines du genre chlorure de calcium ou de lithium; une telle installation permet d'obtenir une température de paroi froide 86 voisine de 5°C, ce qui peut constituer une température idéale pour les chambres froides notamment pour la conservation de fruits et légumes et autres denrées alimentaires. Il apparaît clairement qu'une telle installation est de conception et de coût d'exploitation très économiques.

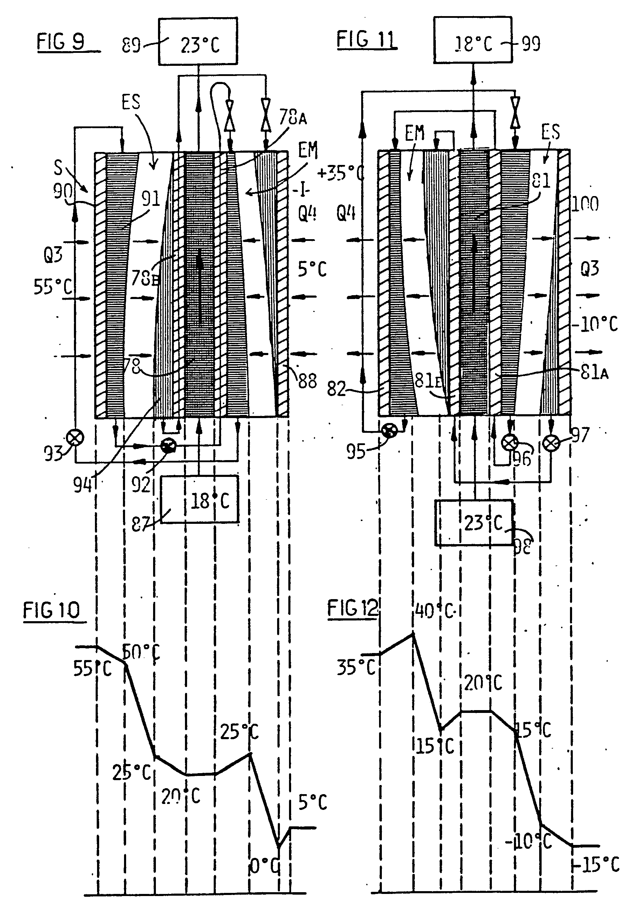

On se reportera maintenant aux figures 9 et 10 dans lesquelles on a illustré de façon plus précise la configuration d'un panneau refroidisseur du type décrit ci-dessus à la figure 6.

Pour extraire la chaleur que l'on veut éliminer sur la paroi intérieure 88 à l'intérieur I du bâtiment, on dispose d'une source de chaleur à bas niveau 87, par exemple de l'eau d'une rivière supposée dans l'exemple illustré à 18°C. Après traversée de l'échangeur central 78 du panneau, l'eau sera rejetée en 89 par exemple à 23°C.

Le rayonnement solaire S qui chauffe la face extérieure 90 du bâtiment permettra d'évaporer dans l'évaporateur-séparateur ES la solution diluée 91 pour la concentrer, permettant de régénérer la saumure qui sera renvoyée par une pompe 92 en tête de l'évaporateur-mélangeur EM sur la surface de la plaque "chaude" 78a de l'évaporateur-mélangeur.

La solution diluée produite dans l'évaporateur-mélangeur EM en bas de la plaque 78a est renvoyée par une pompe de recyclage 93 en haut de la plaque 90 pour alimenter le film 91 de la solution, diluée qui sera reconcentrée dans l'évaporateur-séparateur ES.

L'eau douce recueillie sous forme du film 94 sur la plaque "froide" 78b de l'évaporateur-séparateur ES est également renvoyée dans l'évaporateur-mélangeur EM pour être évaporée sur la plaque 88 et extraire la chaleur $Q_4$ à une température voisine de 5°C dans l'exemple illustré.

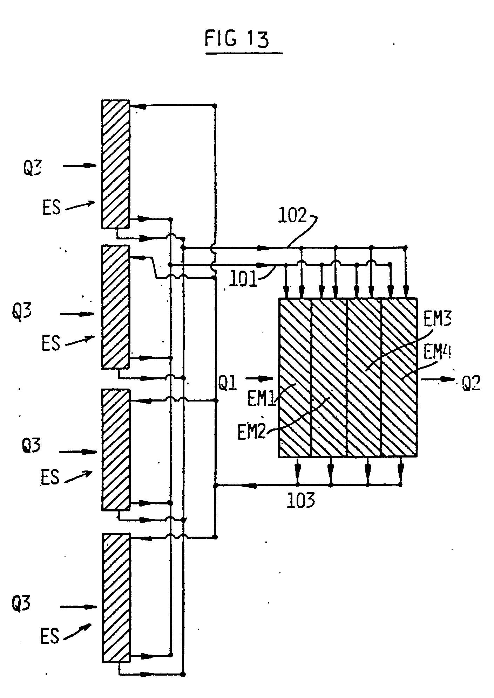

Les figures 11 et 12 illustrent, comme les figures 9 et 10, une réalisation d'un panneau réchauffeur fonctionnant selon le principe décrit à la figure 7.

On ne redécrira pas en détail le fonctionnement de ce dispositif qui se déduit de ce qui précède. On notera seulement les différents circuits et pompes telles que 95 permettant de ramener la solution diluée produite dans l'échangeur EM en tête de l'évaporateur-séparateur ES pour sa régénération, 96 ramenant la saumure concentrée produite dans l'évaporateur ES en tête de l'évaporateur-mélangeur et 97 ramenant l'eau douce produite dans l'évaporateur-séparateur en tête de l'évaporateur-mélangeur.

Dans la solution illustrée, on a supposé que la source de chaleur à bas niveau 98 était disponible à 23°C, le fluide étant rejeté en 99 à 18°C. Comme expliqué précédemment, le panneau réchauffeur fonctionne de façon d'autant plus efficace que le froid sur la façade 100 exposée au nord est rigoureux. En effet, plus la façade 100 est froide, plus efficace est le rendement de fonctionnement de l'évaporateur-séparateur ES, et par conséquent plus grande est la quantité de saumure concentrée fabriquée qui constitue le "combustible noble" nécessaire au fonctionnement de l'installation.

On se reportera maintenant à la figure 13 dans laquelle on a illustré le fonctionnement de quatre évaporateurs-mélangeurs associés en série $EM_1$, $EM_2$, $EM_3$ et $EM_4$ fonctionnant par exemple comme il a été décrit et illustré en relation avec les figures 3 ou 5. Cette installation permet d'extraire d'une source de chaleur à bas niveau une quantité de chaleur $Q_1$ et de délivrer à plus haut niveau une quantité de chaleur sensiblement équivalente $Q_2$.

Comme expliqué précédemment, pour que l'installation fonctionne, il faut lui fournir de façon continue le "solvant" utilisé tel par exemple que de l'eau et la "solution" concentrée de mélange, telle qu'une saumure concentrée. En 101, on a repéré l'alimentation en solvant et en 102 l'alimentation en solution concentrée. A la sortie des échangeurs-mélangeurs est récupérée en 103 la solution diluée, c'est-à-dire le mélange du solvant et de la solution concentrée.

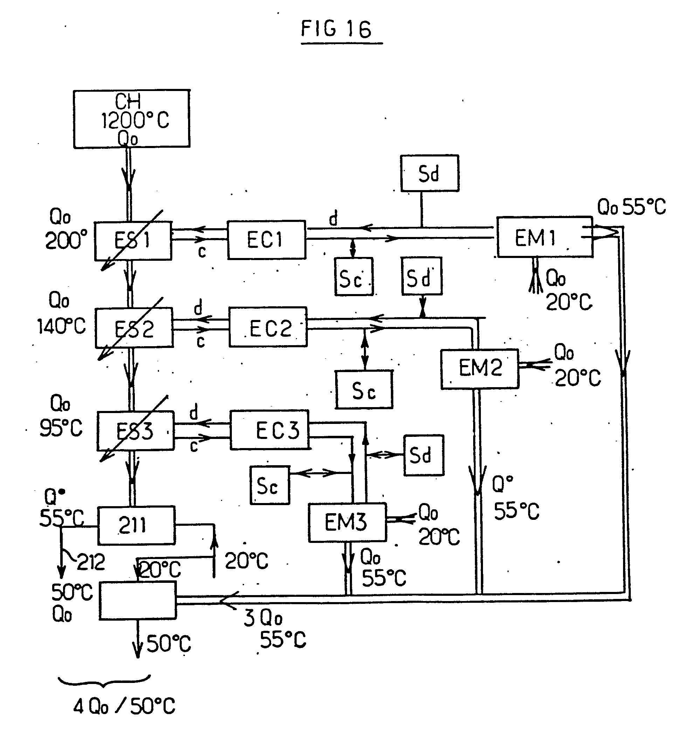

Pour reconstituer le solvant et la solution concentrée à partie de la solution diluée, on peut utiliser par exemple plusieurs évaporateurs-séparateurs qui pourront fonctionner en série ou, plus avantageusement en général, en parallèle. C'est ce qu'illustre la figure 16 dans laquelle quatre évaporateurs-séparateurs permettent de reconstituer la solution concentrée et le solvant à partir de la solution diluée. S'il s'agit du domaine du chauffage d'une habitation, chaque évaporateur-séparateur pourra être constitué par un capteur solaire convenablement orienté par exemple sur le toit du bâtiment, la surface de tous les capteurs pouvant être sensiblement égale à celle du panneau chauffant du bâtiment multipliée par le nombre d'étages d'évaporateurs-mélangeurs montés en série.

Une telle installation permet d'utiliser dans les meilleures conditions de fonctionnement propres les capteurs solaires tout en rendant la température de fonctionnement de ces capteurs sensiblement indépendante de la température à laquelle on désire finalement produire la chaleur $Q_2$ puisée, pour l'essentiel à une source de chaleur disponible à bas niveau. Supposons à titre d'exemple que les évaporateurs-séparateurs soient des capteurs solaires opérant avec la face chaude à 55°C et la face froide à 20°C. Leur densité de puissance thermique sera limitée par celle du rayonnement solaire, par exemple 500 W/m² à 1000 W/m². L'évaporateur-mélangeur à quatre étages, analogue à celui présenté à la figure 3, délivrera de la chaleur à 120°C (par exemple sous forme de vapeur ou d'eau pressurisée) et avec une densité de puissance thermique de l'ordre de 20 à 30 kilowatts/m².

Ainsi, l'installation présentée sur la figure 16 à le double avantage de remonter le niveau de température du flux de chaleur qui serait issu de capteurs solaires ordinaires et de concentrer la densité de ce flux.

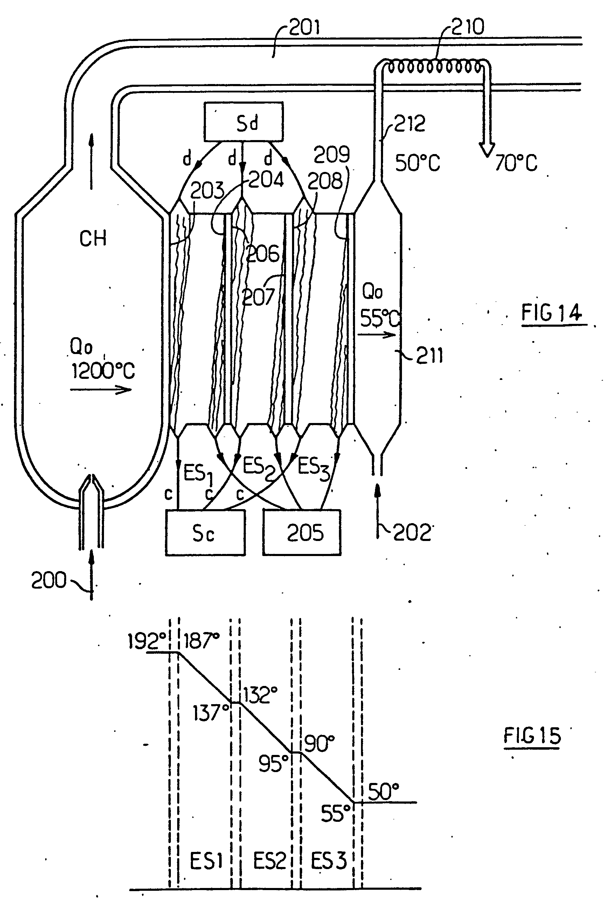

On se reportera maintenant aux figures 14 et 15, illustrant l'application de l'invention à la valorisation d'une énergie thermique à haut niveau.

Comme illustré à la figure 14, l'installation comprend une chaudière ou chambre de combustion CH dans laquelle est introduit en 200 le combustible tel que du fuel par exemple. La combustion dans la chaudière CH élève la température du foyer par exemple vers 1200-1500°C. Les fumées sont envoyées dans l'atmosphère par un conduit 201.

Dans l'exemple illustré, le fluide primaire à chauffer est de l'eau introduite en 202 vers 20°C par exemple. Cependant, conformément à l'invention, l'eau à chauffer n'est pas au contact de la paroi chaude de la chaudière CH. Au contraire, la paroi chaude de la chaudière est en contact avec la face 203 d'un premier évaporateur-séparateur ES1 qui peut être de tout type décrit ci-dessus. Sur la face 203 s'écoule la solution diluée ou diluat d contenue dans un réservoir de stockage ou de collectage Sd. En bas de l'évaporateur-séparateur ES1, on recueille dans un réservoir de stockage Sc la solution concentrée (ou saumure) c.

Simultanément, sur la face en regard 204 de l'évaporateur-séparateur ES1, vient se condenser le solvant qui s'est évaporé à partir du diluat et qui est recueilli dans un réservoir de stockage 205. La solution diluée peut être par exemple une solution aqueuse du type eau/bromure de lithium qui pourra être à 55 % à l'état dilué et à 60 % à l'état concentré.

Au premier étage ES1 d'évaporateur-séparateur, le diagramme de température s'établit comme illustré à la figure 15, la paroi 203 chaude de l'évaporateur étant portée vers 190°C, la paroi froide au voisinage de 135°C.

La face froide 204 du premier étage d'évaporateur-séparateur ES1 est en contact avec la face chaude du second étage ES2, qui fonctionne comme l'étage ES1 mais entre des températures s'échelonnant entre 132°C, température de la face chaude 206, et 95°C, température de la face froide 207. A la base de l'évaporateur-séparateur ES2 alimenté en diluat d à partir du réservoir de stockage Sd, on recueille en parallèle avec l'évaporateur-séparateur ES1 la solution concentrée qui est stockée dans le réservoir Sc et le solvant (ici de l'eau) qui est recueillie dans le réservoir 205.

De la même manière, la face froide 207 du second étage d'évaporateur-séparateur ES2 est en contact avec la face chaude 208 d'un troisième étage d'évaporateur-séparateur ES3 dont la face froide est à 55°C comme le montre le diagramme de la figure 2. Ce troisième étage permet de fabriquer là encore à partir de solutions diluées d des solutions concentrées c.

La face froide 209 du dernier étage d'évaporateur- séparateur ES3 sert de surface d'échange chaude pour réchauffer l'eau fermant le fluide primaire 202 qui est ainsi portée à la sortie de l'installation vers 50°C comme il apparaît sur la figure 14 et sur le diagramme de températures de la figure 15. On notera que dans un tel schéma de fonctionnement, pratiquement, à quelques pertes près négligeables, toute la quantité de chaleur Q₀ libérée vers 1200°C dans la chambre de combustion CH se retrouve libérée à la température de 55°C sur la paroi 209 d'échange thermique du dernier étage d'évaporateur-séparateur ES3 pour chauffer l'eau primaire à 50°C.

On comprend que de la sorte l'installation ci-dessus décrite permet d'utiliser la dégradation de l'énergie de 1200°C à 55°C pour former à partir de solutions diluées des solutions concentrées de saumure, sans consommer pratiquement de quantités de chaleur. Il s'ensuit que toute la saumure fabriquée pourra être utilisée, selon les principes décrits plus haut, pour extraire à partir d'évaporateurs- mélangeurs associés, de la chaleur puisée dans une source froide à température inférieure à celle où la chaleur doit être libérée. De cette façon, on améliore considérablement le rendement thermique de l'installation, et ce sans faire appel à aucun apparellage compliqué ni sujet à usure, l'essentiel' de l'apparellage étant constitué de plaques d'échange disposées en regard à faible distance, les seuls organes mécaniques de l'installation étant formés par des pompes de circulation de technologie parfaitement connue et économique telles que les pompes de circulation de chauffage central.

Avantageusement, comme illustré à la figure 14, et de manière classique sur les chaudières, on dispose, comme schématisé en 210, un récupérateur de chaleur sur le circuit des fumées, permettant d'élever la température de l'eau produite, par exemple de 50°C à 70°C. Evidemment, dans le schéma indiqué, la quantité de chaleur récupérable dans les fumées dépendra essentiellement de leur température, c'est-à-dire de celle de la paroi chaude 203 du premier étage d'évaporateur-séparateur ES1. Cette quantité récupérable dépend également de la température de l'eau produite, plus basse étant cette dernière, plus grande étant la chaleur récupérée, notamment par condensation de la vapeur d'eau contenue dans les fumées.

On se reportera à la figure 16 dans laquelle on a montré un diagramme d'utilisation pouvant correspondre à l'installation schématisé à la figure 14.

On retrouve dans cette figure la chaudière CH fournissant une quantité de chaleur $Q_0$ à 1200°C. Dans le schéma, les transferts de chaleur ont été schématisés par des doubles traits rapprochés et la direction d'écoulement de la chaleur a été schématisée par des flèches. La chaleur $Q_0$ traverse le premier étage d'évaporateur-séparateur ES1 dont elle traverse la paroi chaude en subissant une dégradation de 1200 à 200°C. Dans des installations plus élaborées, cette dégradation pourrait être préalablement mise à profit pour faire travailler d'autres évaporateurs-séparateurs fonctionnant avec des fluides appropriés. Cette quantité de chaleur $Q_0$ se retrouve à la sortie de l'évaporateur- séparateur ES1 à l'état dégradé vers 140°C à l'entrée du deuxième évaporateur-séparateur ES2, qu'elle traverse à son tour pour sortir à l'état dégradé vers 95°C avant de traverser le troisième évaporateur-séparateur ES3 sont elle sort finalement à 55°C et est utilisée à ce niveau pour chauffer le fluide primaire, par exemple de l'eau, dans l'échangeur 211, permettant de porter de l'eau entrant à 20°C vers 50°C.

Si' l'on néglige les pertes thermiques dans l'installation, on recueille donc sur la sortie d'eau chaude en 212 sensiblement la quantité de chaleur $Q_0$ fournie par la chaudière CH ayant servi à porter la température de l'eau de 20°C à 50°C.

On considèrera maintenant les circuits de diluats et saumures entrant et sortant des évaporateurs-séparateurs.

Le premier évaporateur-séparateur ES1 délivre à sa sortie un concentrat c porté à une température voisine de 187°C (figure 15). Ce concentrat chaud traverse un échangeur de chaleur EC1 ,qui permettra de réchauffer à contre- courant le diluat d fourni en tête du séparateur ES1 à partir du réservoir de stockage Sd. Aux pertes près, les quantités de chaleur requises s'équilibrent dans l'échangeur EC1, ce qui permet de retrouver à la sortie de l'évaporateur-séparateur ES1 le même flux de chaleur $Q_0$ que le flux initial. La saumure refroidie est stockée dans le réservoir Sc.

Ce qui vient d'être décrit pour l'évaporateur-séparateur ES1 est également vrai pour l'évaporateur-séparateur ES2 et l'échangeur de chaleur associé ES2, et de même pour l'évaporateur-séparateur ES3 et l'évaporateur de chaleur associé EC3.

Cependant, le but de la formation de la saumure c à partir du diluat d est de permettre d'alimenter des évaporateurs-mélangeurs qui permettent à leur tour d'extraire de la chaleur à bas niveau pour la revaloriser. Ainsi, le réservoir de stockage de saumure Sc relié au circuit d'évaporateur ES1 est relié à un évaporateur-mélangeur EM1, et de même le réservoir de stockage du diluat Sd. Lorsqu'un besoin de chaleur non satisfait se fait sentir, il suffit de mettre en fonctionnement l'évaporateur-mélangeur EM1 en l'alimentant en saumure à partir du réservoir Sc sur lequel il est connecté et en diluat à partir du réservoir Sd avec lequel il est en liaison, comme décrit par exemple à la figure 1.

De cette façon, une quantité de chaleur $Q_0$ peut être "pompée" dans une source à bas niveau, par exemple à 20°C et "remontée" pour être libérée à 55°C de façon par exemple à réchauffer de 20°C à 50°C l'eau primaire de chauffage. La même chose peut être faite dans le deuxième échangeur-mélangeur EM2 alimenté à partir de l'évaporateur-séparateur ES2 et la même chose peut être faite à partir de l'évaporateur-mélangeur EM3 alimenté à partir de l'évaporateur- séparateur ES3.

Bien entendu, et c'est un avantage important de l'invention, il est possible de faire fonctionner simultanément ou non, et indépendamment les uns des autres, la chaudière et chacun des évaporateurs-mélangeurs EM1, EM2, et EM3. Ainsi, il est possible de stocker sous forme de saumure des quantités de chaleur très importantes (fonction du volume des réservoirs de stockage). D'autre part, on peut dire qu'en régime continu, la puissance de chauffage de l'installation, dans l'exemple illustré, a été multipliée par quatre, l'installation permettant de sortir en continu une quantité de chaleur égale à $4Q_0$ à 50°C, et ce à partir d'une quantité de chaleur égale à $Q_0$ libérée à 1200°C.

L'installation assure donc une valorisation considérable de l'énergie thermique noble en mettant à profit la dégradation de l'énergie dans des proportions plus importantes et avec des systèmes de mise en oeuvre plus simples que les solutions préconisées à ce jour.

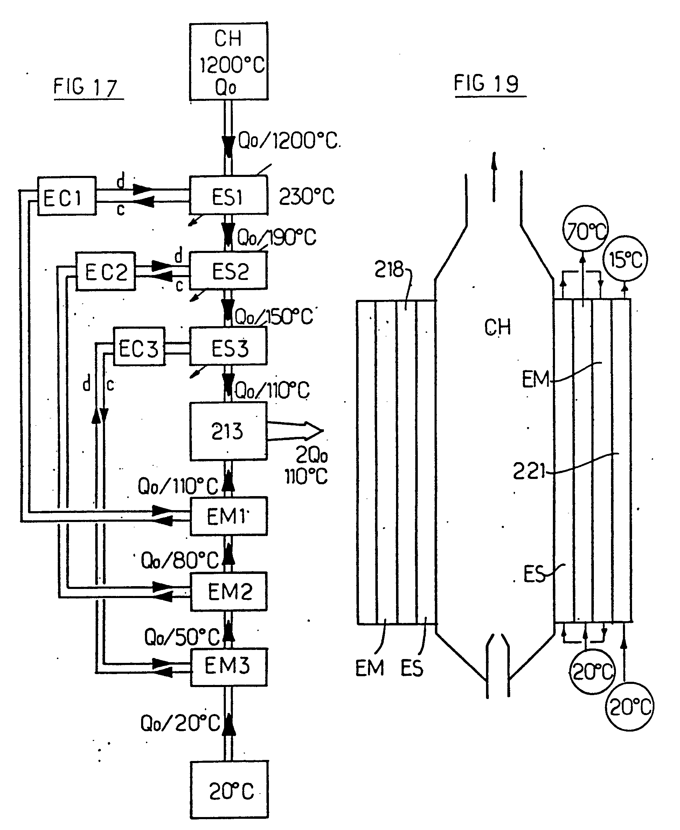

On se reportera maintenant à la figure 17, dans laquelle on a illustré un autre schéma de fonctionnement d'une chaudière CH destinée à fournir dans l'exemple illustré de la vapeur à 110°C fabriquée dans un bouilleur 213.

Comme dans l'exemple précédemment donné, la chaudière CH ne chauffe pas directement le bouilleur 213, mais indirectement à travers trois évaporateurs-séparateurs ES1, ES2 et ES3 montés en série dans lesquels la température se dégrade successivement de 230 à 190°C, de 190 à 150°C et de 150 à 110°C. Bien entendu, les pressions dans ces évaporateurs-séparateurs et les natures et concentrations des solutions sont déterminées pour avoir les conditions d'équilibre de fonctionnement requises comme décrit plus haut.

A travers les trois évaporateurs ES1, ES2 et ES3, on recueille donc au bouilleur 213 une quantité de chaleur égale à $Q_0$ libérée à 110°C.

Chacun des évaporateurs-séparateurs ES1, ES2 et ES3 permet d'autre part de préparer, de façon analogue à ce qui a été décrit ci-dessus, des solutions concentrées à partir de solutions diluées, lesquelles solutions sont fournies à des évaporateurs-mélangeurs EM1, EM2 et EM3. Bien entendu, comme au mode de réalisation illustré à la figure 16, il est possible et avantageux de prévoir des réservoirs de stockage de telles solutions diluées d et solutions concentrées c de façon à donner plus de souplesse à l'installation et ne faire appel à la réserve d'énergie stockée sous forme de saumure pour faire fonctionner les évaporateurs- mélangeurs que lorsqu on en a besoin. De façon à ne pas surcharger la figure, ces réservoirs de stockage n'ont pas été représentés.

En supposant qu'on dispose d'une source d'énergie à bas niveau vers 20°C, il est possible, en faisant fonctionner les trois évaporateurs-mélangeurs EM3, EM2 et EM1 en série, comme expliqué notamment en relation avec les figuses 3 et 4, et en choisissant les solutions concentrées et diluées appropriées de relever la température de la quantité de chaleur $Q_0$ prélevée à 20°C dans la source froide pour la libérer vers 110°C au bouilleur 213. Ainsi, l'on recueille au bouilleur 213 (lorsque l'installation fonctionne en continu) une puissance $2Q_0$, c'est-à-dire double de celle libérée à la chaudière CH.

A ce niveau de la déscription, il est intéressant de comparer l'installation décrite à la figure 13 et les installations décrites aux figures 16 et 17.

La comparaison de ces figures montre qu'à la figure 13 on utilisait quatre évaporateurs-séparateurs associés en parallèle (chauffés dans l'hypothèse décrite par le rayonnement solaire) destinés à alimenter quatre évaporateursmélangeurs en série. A la figure 17, on a trois évaporateurs-séparateurs montés en série allmentant trois évapora- teurs-mélangeurs montés en série. A la figure 16, on a trois évaporateurs-séparateurs montés en série allmentant trois évaporateurs-mélangeurs montés en parallèle.

En fait, il apparaît clairement que selon l'invention, il est possible de grouper les évaporateurs-séparateurs d'une installation et les évaporateurs-mélangeurs de la même installation soit en série, soit en parallèle, soit même de combiner les montages série-parallèle, permettant de donner plus de souplesse au fonctionnement de l'installation. On notera qu'en particulier il est possible de faire fonctionner certains évaporateurs-séparateurs et certains évaporateurs-mélangeurs avec des solutions d'un type donné et d'autres évaporateurs-séparateurs ainsi que d'autres évaporateurs-mélangeurs avec d'autres solutions, adaptées aux niveaux de température de fonctionnement de ces appareils.

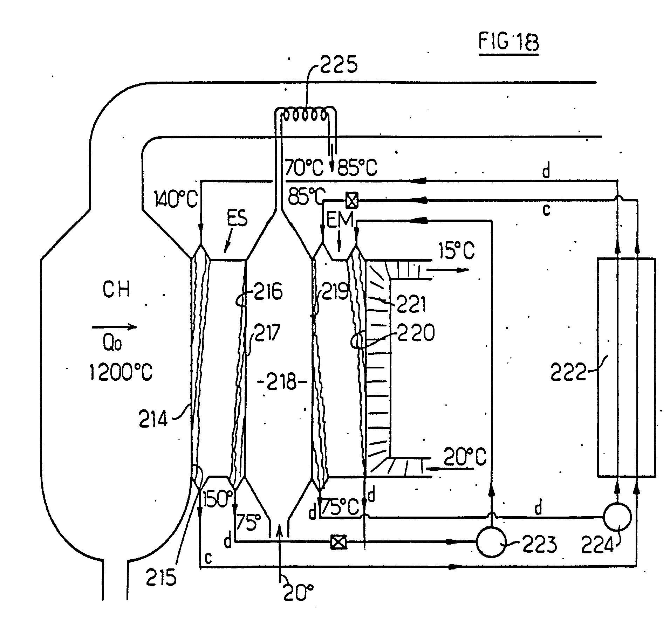

On se reportera maintenant à la figure 18 dans laquelle on décrira une réalisation d'une installation simplifiée.

Cette installation comprend une chaudière CH dans laquelle est par exemple brûlé du fuel ou du gaz vers 1200-1500°C. La paroi 214 de la chaudière qui est en contact avec la paroi d'évaporation 215 de l'évaporateur-séparateur ES est portée à une température voisine de 150 à 160°C. Sur la paroi 215 de l'évaporateur-séparateur est amenée la solution diluée $\underline{d}$ qui est reconcentrée, la solution concentréé s'écoulant en bas de l'évaporateur-séparateur en étant portée à une température voisine de 150°C. La paroi de condensation 216 de l'évaporateur-séparateur ES est refroidie en étant en contact avec la paroi 217 de l'échangeur de chaleur 218 dans lequel s'effectue la chauffage du fluide primaire à chauffer, constitué par exemple par de l'eau introduite vers 20°C dans l'échangeur 218. Dans l'exemple illustré, on a supposé que l'eau ressortait à une température de 70°C, ce qui signifie que la paroi de condensation 216 de l'évaporateur-séparateur ES est à une température moyenne de 75°C. Avec les solutions de bromure de lithium mentionnées, la pression de vapeur dans l'évaporateur-séparateur ES est de l'ordre de 500 mm de mercure.

De cette façon, la chaleur $Q_0$ libérée à 1200°C dans la chambre de combustion de la chaudière CH traverse l'évaporateur ES dans lequel est réalisé la reconcentration des solutions diluées $\underline{d}$ en solutions concentrées $\underline{c}$ et est libérée vers 70°C dans la chambre 218 de chauffage du fluide primaire.

La solution concentrée $\underline{c}$ fabriquée dans l'évaporateur-séparateur ES est ramenée en tête de l'évaporateur- mélangeur EM au contact de la paroi "chaude" 219 de l'évaporateur-mélangeur, supposée portée ici à une température moyenne voisine de 75°C. Cette solution concentrée absorbe la vapeur d'eau évaporée sur la surface "froide" 220 de l'évaporateur-mélangeur, évaporation qui assure le transfert de l'énergie prélevée dans la source froide qui est supposée, dans l'exemple illustré, être constituée par de l'eau 221 portée à 20°C. Dans ces conditions d'utilisation et avec les solutions envisagées, la pression de vapeur dans l'évaporateur-mélangeur EM est d'environ 15 mm de mercure. La traversée de l'évaporateur-mélangeur abaisse la température de la source froide d'environ 5°C, l'eau entrant donc à 20°C et sortant à 15°C.

L'installation est complétée par un échangeur de chaleur à contre-courant 222 qui récupère une partie de la chaleur de la solution concentrée sortant à 150°C de l'évaporateur-séparateur pour l'amener vers 85°C en tête de l'évaporateur-mélangeur, en échange de la solution diluée $\underline{d}$ sortant de l'échangeur-mélangeur à la température de 75°C pour l'amener en tête de l'évaporateur-séparateur vers 140°C. Des pompes de circulation telles que 223, 224 complètent l'installation. Grâce à cette disposition, la puissance calorifique de chauffage de l'installation est sensiblement doublée, la dégradation de l'énergie noble étant mise à profit pour permettre l'extraction d'une énergie en quantité sensiblement équivalente puisée dans une source de température à bas niveau.

Un récupérateur de chaleur 225 placé sur le circuit des fumées complètera avantageusement l'installation.

De façon à simplifier la construction et à limiter les pertes de chaleur, tous les appareils ci-dessus décrits peuvent être construits et assemblés concentriquement autour de la chambre de combustion CH. Un tel groupement permet également d'avoir une construction très compacte et simple, comme illustré schématiquement à la figure 19.

A cette figure, on retrouve la chambre de combustion CH entourée de l'évaporateur-séparateru ES puis de la chambre 218 dans laquelle s'effectue le chauffage du fluide primaire, puis l'évaporateur-mélangeur EM, et enfin la chambre 221 périphérique dans laquelle circule l'eau formant source froide à bas niveau dans laquelle est puisée, selon les principes décrits précédemment, la chaleur revalorisée grâce à une telle installation.

A la figure 19, on a indiqué les températures correspondant à l'exemple donné à la figure 22, l'enceinte 218 étant chauffée d'un côté par la paroi "froide" de l'évaporateur-séparateur ES et de l'autre côté par la paroi "chaude" de l'évaporateur-mélangeur EM.

On notera in fine que les rendements de chaleur effectifs reçus seront dans la pratique un peu plus faibles que les rendements théoriques attendus et explicités ci- dessus, et ce compte tenu de ce que les appareils ne sont pas parfaitement réversibles. Ainsi par exemple, une installation telle que schématisée à la figure 16 permettra de recueillir en continu une quantité de chaleur sensiblement égale à $3Q_0$ au lieu de $4Q_0$ théorique et de même à la figure 17, on pourra extraire environ $1,7Q_0$ au lieu de $2Q_0$ et ce, avec des appareils de construction mécanique simple courante industriellement.

D'autre part, il apparaît clairement que de nombreuses variantes de forme et d'aspect des échangeurs ainsi que des conditions d'utilisation peuvent être imaginées, notamment au niveau de la distribution du solvant et de la saumure. Par exemple, aux schémas des figures 9 et 11, les pompes 92 et 95 peuvent être omises, l'écoulement des liquides dans les branches correspondantes des circuits s'effectuant par simple différence de pression existant au niveau des enceintes des évaporateurs-séparateurs et des évaporateurs-mélangeurs respectifs.

D'autre part, de nombreux autres fluides que l'eau ou même des mélanges de fluides pourront être utilisés comme "solvants". Dans le cas d'utilisations à basses températures (0° C et en dessous), on prendra un fluide plus volatif que l'eau, par exemple l'ammoniac, un alcool) etc... Dans le cas d'utilisations à hautes températures (200° C et au dessus), on utilisera un fluide moins volatil que l'eau, par exemple un métal volatil tel que mercure, cadmium, sodium.

**Revendications**

1. Système pour la valorisation d'énergie thermique disponible à bas niveau pour le chauffage ou la climatisation de bâtiments, comprenant:

- au moins un dispositif formant évaporateur-mélangeur (EM), constitué d'une première plaque d'évaporation (1, 88, 81E, 220) et d'une première plaque de condensation (2, 78A, 82, 219) disposée à faible distance et de préférence sensiblement en regard de la première plaque d'évaporation, la face intérieure (1B) de la première plaque d'évaporation formant la surface d'évaporation d'un premier liquide et la face intérieure (2B) de la première plaque de condensation formant une surface de condensation sur laquelle la vapeur formée du premier liquide se condense et se mélange à un deuxième liquide, et

- au moins un dispositif formant évaporateur-séparateur (ES) constitué d'une deuxième plaque d'évaporation (90, 81A, 214, 203, 206, 208) et d'une deuxième plaque de condensation (78B, 100, 216, 204, 207, 209) disposée à faible distance et de préférence sensiblement en regard de la deuxième plaque d'évaporation, la face intérieure de la deuxième plaque d'évaporation formant une surface d'évaporation du premier liquide à partir d'un mélange du premier et du deuxième liquides et la face interne de la deuxième plaque de condensation formant une surface de condensation de la vapeur formée du premier liquide, l'évaporateur-séparateur (ES) servant à reconstituer, à partir du mélange de condensats de la vapeur du premier liquide avec ledit second liquide qu'il reçoit dudit évaporateur-mélangeur (EM), lesdits premier et second liquides, l'évaporateur-mélangeur (EM) et l'évaporateur-séparateur (ES) étant associés de telle façon que:

en cas de chauffage, la face extérieure de la première plaque d'évaporation (81E, 220) est chauffée par ladite énergie thermique à bas niveau, tandis que la face extérieure de la deuxième plaque d'évaporation (81A, 214, (203, 206, 208) est chauffée par ladite énergie thermique à bas niveau ou par toute énergie thermique disponible à niveau plus élevé, la face extérieure de la première plaque de condensation (82, 219) dégage une énergie thermique à un niveau revalorisé par rapport audit bas niveau, et la face extérieure de la deuxième plaque de condensation (100, 216, 204, 207, 209) est refroidie par une source extérieure de froid disponible à un niveau inférieur au niveau de chauffage de ladite deuxième plaque d'évaporation, et

en cas de climatisation, la face extérieure de la première plaque de condensation (78A) ainsi que la face extérieure de la deuxième plaque de condensation (78B) sont refroidies par ladite énergie thermique à bas niveau, la face extérieure de la première plaque d'évaporation (88) absorbe une énergie thermique à un niveau abaissé par rapport audit bas niveau, et la face extérieure de la deuxième plaque d'évaporation est chauffée par une source thermique à un niveau plus élevé par rapport audit bas niveau.

2. Système selon la revendication 1, caractérisé en ce qu'on utilise des évaporateurs-mélangeurs (EM) pour réchauffer le bâtiment sur ses surfaces intérieures (I) et des évaporateurs-séparateurs (ES) pour reconstituer la solution de travail sur ses surfaces extérieures froides, les evaporateurs-mélangeurs et les évaporateurs-séparateurs étant ainsi disposés qu'ils sont mis en contact par leurs surfaces en regard, lesquelles constituent respectivement la première plaque d'évaporation de l'évaporateur-mélangeur (EM) et la deuxième plaque d'évaporation de l'évaporateur- séparateur (ES), avec la source d'énergie thermique à bas niveau dans laquelle sera puisée la chaleur nécessaire au fonctionnement du système.

3. Système selon la revendication 1 caractérisé en ce qu'on utilise des évaporateurs-mélangeurs (EM) pour climatiser le bâtiment sur ses surfaces intérieures et des évaporateurs-séparateurs (ES) pour reconstituer la solution de travail sur ses surfaces extérieures chauffées audit niveau plus élevé, les évaporateurs-mélangeurs et les évaporateurs-séparateurs étant ainsi disposés qu'ils sont mis en contact par leurs surfaces en regard, lesquelles constituent respectivement la première plaque de condensation de l'évaporateur-mélangeur (EM) et la deuxième plaque de condensation de l'évaporateur-séparateur (ES) avec ladite source d'énergie thermique à bas niveau dans laquelle sera absorbée la chaleur nécessaire au fonctionnement du système.

4. Système selon la revendication 1 pour la valorisation d'énergie thermique à haut niveau destinée à chauffer un fluide primaire d'une installation de chauffage dissipée dans une chaudière chauffée par une énergie noble telle que celle libérée par la combustion d'un combustible solide, liquide ou gazeux ou encore par de l'énergie électrique, caractérisé en ce que ladite chaudière (CH) est utilisée en premier lieu pour assurer le chauffage de la face extérieure de la deuxième plaque précitée d'évaporation desdits évaporateurs-séparateurs (ES) dont la deuxième plaque de condensation (209, 217) est mise en contact thermique avec le fluide à chauffer de l'installation.

5. Système selon la revendication 4, caractérisé en ce que le fluide à chauffer de l'installation est également en contact thermique avec la première plaque de condensation (219) des évaporateurs-mélangeurs (EM).

6. Système selon la revendication 4 ou la revendication 5, caractérisé en ce que les rejets thermiques provenant de ladite chaudière (CH) après travail dans lesdits évaporateurs-séparateurs (ES) sont utilisés pour chauffer le fluide primaire d'échange (211, 213, 218).

7. Système selon l'une des revendications 4 à 6, caractérisé en ce que lesdits évaporateurs-mélangeurs (EM) ne sont utilisés que lorsque le besoin de chaleur nécessaire à chauffer ledit fluide primaire n'est pas satisfait par lesdits rejets thermiques, et les solutions concentrées (saumures, formées et non utilisées étant stockées (SC) en vue d'une utilisation ultérieure.

8. Système selon l'une des revendications 4 à 7 caractérisé en ce que plusieurs évaporateurs-séparateurs (ES) et plusieurs évaporateurs-mélangeurs (EM) étant disposés en cascades, le fluide primaire à chauffer (211, 218) est au contact à travers une paroi d'échange (209, 217) avec les solutions de travail à moins haute température produites au dernier étage des évaporateurs-séparateurs (ES) de l'installation et à travers une autre paroi d'échange (219) avec les solutions de travail à plus haute température produites au dernier étage des évaporateurs-mélangeurs (EM) de l'installation.

9. Système selon la revendication 8, caractérisé en ce que ladite chaudière (CH) est disposée au centre de l'installation et est entourée sur la plus grande partie de sa surface par le premier étage d'évaporateurs-séparateurs (ES) avec lequel elle est en échange thermique, le fluide primaire à chauffer entoure le dernier étage desdits évaporateurs-séparateurs (ES) avec lequel il est en échange thermique, et le dernier étage desdits évaporateurs- mélangeurs (EM) entoure ledit fluide primaire avec lequel il est en échange thermique, tandis que le premier étage desdits évaporateurs-mélangeurs (EM) est entouré par le fluide de la source thermique à bas niveau avec lequel il est en échange thermique.

10. Système selon la revendication 9, caractérisé en ce que la construction est généralement cylindrique circulaire.

**Patentansprüche**

1. System für das Aufwerten von auf niedrigem Niveau zur Verfügung stehender thermischer Energie für das Heizen oder Klimatisieren von Gebäuden, mit:
- mindestens einer Vorrichtung, die einen Verdampfer-Mischer (EM) bildet, der aus einer ersten Verdampferplatte (1, 88, 81E, 220) und einer ersten Kondensationsplatte (2, 78A, 82, 219) besteht, die in geringem Abstand und vorzugsweise im wesentlichen gegenüber der ersten Verdampferplatte angeordnet ist, wobei die Innenfläche (1B) der ersten Verdampferplatte die Verdampferoberfläche einer ersten Flüssigkeit bildet und die innere Fläche (2B) der ersten Kondensationsplatte eine Kondensationsfläche bildet, auf welcher der Dampf, der von der ersten Flüssigkeit gebildet ist, sich kondensiert und sich mit einer zweiten Flüssigkeit mischt, und
- mindestens einer Vorrichtung, die einen Verdampfer-Trenner (ES) bildet, der aus einer zweiten Verdampferplatte (90, 81A, 214, 203, 206, 208) und einer zweiten Kondensationsplatte (78B, 100, 216, 204, 207, 209) besteht, die in geringem Abstand und vorzugsweise im wesentlichen gegenüber der zweiten Verdampfungsplatte angeordnet ist, wobei die innere Fläche der zweiten Verdampferplatte eine Verdampfungsoberfläche der ersten Flüssigkeit bildet, ausgehend von einem Gemisch der ersten und zweiten Flüssigkeit, und wobei die innere Fläche der zweiten Kondensationsplatte eine Kondensationsoberfläche des Dampfes bildet, der von der ersten Flüssigkeit gebildet ist, wobei der Verdampfer-Trenner (ES), ausgehend von dem Kondensatgemisch des Dampfes der ersten Flüssigkeit mit der zweiten Flüssigkeit, die er von diesem Verdampfer-Mischer (EM) aufnimmt, der Wiederherstellung dieser ersten und zweiten Flüssigkeit dient, wobei der Verdampfer-Mischer (EM) und der Verdampfer-Trenner (ES) derart zugeordnet sind, daß:

im Falle der Heizung die Außenfläche der ersten Verdampferplatte (81E, 220) durch die thermische Energie mit niedrigem Niveau geheizt wird, während die Außenfläche der zweiten Verdampferplatte (81A, 214, 203, 206, 208) durch die thermische Energie auf niedrigem Niveau oder durch die ganze auf höherem Niveau zur Verfügung stehende thermische Energie erwärmt wird, wobei die Außenfläche der ersten Kondensationsplatte (82, 219) eine thermische Energie auf einem aufgewerteten Niveau bezüglich des niedrigen Niveaus freisetzt und die Außenfläche der zweiten Kondensationsplatte (100, 216, 204, 207, 209) durch eine äußere Kältequelle gekühlt wird, die auf einem Niveau unter dem Heizniveau der zweiten Verdampferplatte zur Verfügung steht, und

im Falle der Klimatisierung die Außenfläche der ersten Kondensationsplatte (78A) sowie die Außenfläche der zweiten Kondensationsplatte (78B) durch die thermische Energie auf niedrigem Niveau gekühlt werden, wobei die Außenfläche der ersten Verdampferplatte (88) eine thermische Energie auf einem Niveau absorbiert, welche bezüglich dem niedrigen Niveau verringert ist, und wobei die Außenfläche der zweiten Verdampferplatte durch eine Wärmequelle auf ein höheres Niveau bezüglich dem niedrigen Niveau geheizt wird.

2. System nach Anspruch 1, dadurch gekennzeichnet, daß man Verdampfer-Mischer (EM) verwendet, um das Gebäude auf seinen Innenflächen (I) aufzuheizen, und Verdampfer-Trenner (ES), um die Arbeitslösung auf seinen kalten Außenflächen wieder herzustellen, wobei die Verdampfer-Mischer und die Verdampfer-Trenner so angeordnet sind, daß sie mit ihren Oberflächen, welche jeweils die erste Verdampferplatte des Verdampfer Mischers (EM) und die zweite Verdampferplatte des Verdampfer-Trenners (ES) bilden, mit der Wärmeenergiequelle auf niedrigem Niveau gegenüber in Kontakt sind, aus welcher die für die Funktion des Systems notwendige Wärme entnommen wird.

3. System nach Anspruch 1, dadurch gekennzeichnet, daß man die Verdampfer-Mischer (EM) verwendet, um das Gebäude auf seinen inneren Flächen zu klimatisieren, und die Verdampfer-Trenner (ES) verwendet, um die Arbeitslösung auf den Außenflächen wieder herzustellen, die auf das erhöhte Niveau erwärmt sind, wobei die Verdampfer-Mischer und die Verdampfer-Trenner so angeordnet sind, daß sie mit ihren Flächen, welche jeweils die erste Kondensationsplatte des Verdampfer-Mischers (EM) und die zweite Kondensationsplatte des Verdampfer-Trenners (ES) bilden, mit dieser Wärmeenergiequelle auf niedrigem Niveau gegenseitig in Kontakt sind, in welcher die für die Funktion des Systems notwendige Wärme absorbiert wird.

4. System nach Anspruch 1 für das Aufwerten von Wärmeenergie auf hohes Niveau zum Erwärmen eines ersten Fluids einer Heizanlage, wobei die Energie in einen Kessel abgeführt wird, der durch eine ergiebige Energie geheizt wird, wie sie durch die Verbrennung eines festen, flüssigen oder gasförmigen Brennstoffes freigesetzt wird, oder auch durch die elektrische Energie, dadurch gekennzeichnet, daß der Kessel (CH) in erster Linie dazu benutzt wird, um die Erwärmung der Außenfläche der genannten zweiten Verdampferplatte der Verdampfer-Trenner (ES) sicherzustellen, deren zweite Kondensationsplatte (209, 217) mit dem zu erwärmenden Fluid der Anlage in Wärmekontakt gebracht wird.

5. System nach Anspruch 4, dadurch gekennzeichnet, daß das zu erwärmende Fluid der Anlage auch mit der ersten Kondensationsplatte (219) der Verdampfer-Mischer (EM) in Wärmekontakt steht.

6. System nach Anspruch 4 oder Anspruch 5, dadurch gekennzeichnet, daß die Wärmeausstöße aus diesem Kessel (CH) nach der Arbeit in den Verdampfer-Trennern (ES) für die Erwärmung des ersten Austauscherfluids (211, 213, 218) verwendet werden.

7. System nach einem der Ansprüche 4 bis 6, dadurch gekennzeichnet, daß die Verdampfer-Mischer (EM) nur verwendet werden, wenn der Bedarf an Wärme, die notwendig ist, um das primäre Fluid zu erwärmen, durch die Wärmeausstöße nicht ausreicht, und daß die gebildeten und nicht benutzten konzentrierten Lösungen (Salzlösungen) im Hinblick auf eine weitere Benutzung gelagert werden (SC).

8. System nach einem der Ansprüche 4 bis 7, dadurch gekennzeichnet, daß mehrere Verdampfer-Trenner (ES) und mehrere Verdampfer-Mischer (EM) in Kaskaden angeordnet sind und das erste zu erwärmende Fluid (211, 218) über eine Austauscherwand (209, 217) in Kontakt ist mit den Arbeitslösungen mit weniger hoher Temperatur, die in der letzten Stufe der Verdampfer-Trenner (ES) der Anlage erzeugt sind, sowie über eine andere Austauscherwand (219) in Kontakt steht mit den Arbeitslösungen mit höherer Temperatur, die in der letzten Stufe der Verdampfer-Mischer (EM) der Anlage erzeugt sind.

9. System nach Anspruch 8, dadurch gekennzeichnet, daß der Kessel in der Mitte der Anlage angeordnet und auf dem größten Teil seiner Oberfläche von der ersten Stufe der Verdampfer-Trenner (ES) umgeben ist, mit welcher er im Wärmeaustausch steht, wobei das erste, zu erwärmende Fluid die letzte Stufe der Verdampfer-Trenner (ES) umgibt, mit welcher es im Wärmeaustausch steht, und wobei die letzte Stufe der Verdampfer-Mischer (EM) das erste Fluid umgibt, mit welchem sie in Wärmekontakt steht, während die erste Stufe der Verdampfer-Mischer (EM) vom Fluid der Wärmequelle mit niedrigem Niveau umgeben wird, mit welchem sie in Wärmekontakt steht.

10.System nach Anspruch 9, dadurch gekennzeichnet, daß der Aufbau im allgemeinen kreiszylindrisch ist.

## Claims

1. A system for the exploitation of heat energy available at low level for the heating or air conditioning of buildings and comprising:
- at least one device constituting an evaporator-mixer (EM), consisting of a first evaporation panel (1, 88, 81E, 220) and a first condensation panel (2, 78A, 82, 219) disposed at a short distance from and preferably substantially opposite the first evaporation panel, the inner surface (1B) of the first evaporation panel forming the evaporation surface of a first liquid and the inner surface (2B) of the first condensation panel constituting a condensation surface on which the vapour formed from the first liquid condenses and mixes with a second liquid, and
- at least one device constituting an evaporator-separator (ES) comprising a second evaporation plate (90, 81A, 214, 203, 206, 208) and a second condensation panel (78B, 100, 216, 204, 207, 209) disposed at a short distance from and preferably substantially opposite the second evaporation panel, the inner surface of the second evaporation panel forming an evaporation surface for the first liquid from a mixture of the first and second liquids and the inner surface of the second condensation panel forming a surface for condensation of the vapour formed from the first liquid, the evaporator-separator (ES) serving to reconstitute from the mixture of condensates of the vapour of the first liquid with the said second liquid which it receives from the said evaporator-mixer (EM), the said first and second liquids, the evaporator-mixer (EM) and the evaporator-separator (ES) being so associated that:
in the case of heating, the outer surface of the first evaporation panel (81E, 220) is heated by the said low-level thermal energy whereas the outer surface of the second evaporation plate (81A, 214, 203, 206, 208) is heated by the said low-level thermal energy or by any thermal energy available at a higher level, the outer surface of the first condensation panel (82, 219) releasing a thermal energy at a level which is revalued in relation to the said low level and the outer surface of the second condensation panel (100, 216, 204, 207, 209) is cooled by an external cold source available at a level below the heating level of the said evaporation panel and
in the case of air conditioning, the outer surface of the first condensation panel (78A) and the outer surface of the second condensation panel (78B) are cooled by the said flow-level thermal energy, the outer surface of the first evaporation panel (88) absorbing a thermal energy at a level which is lowered in relation to the said low level, and the outer surface of the second evaporation plate is heated by a thermal source at a higher level than the said low level.

2. A system according to Claim 1, characterised in that evaporator-mixers (EM) are used for reheating the building on its inner surfaces (I) while evaporator-separators (ES) are used for reconstituting the working solution on its outer cold surfaces, the evaporator-mixers and the evaporator- separators being so disposed that they are brought into contact by their facing surfaces which respectively constitute the first evaporation panel of the evaporator- mixer (EM) and the second evaporation panel of the evaporator-separator (ES) with the source of low-level thermal energy from which will be drawn the heat needed for the system to function.

3. A system according to Claim 1, characterised in that evaporator-mixers (EM) are used for air conditioning the building over its inner surfaces and evaporator-separators are used for reconstituting the working solution over the outer surfaces which are heated to the said higher level, the evaporator-mixers and evaporator- separators being so disposed that their mutually facing surfaces which respectively constitute the first condensation panel of the evaporator-mixer (EM) an the second condensation panel of the evaporator-separator (ES) are brought into contact with the said source of low-level thermal energy from which the heat required for operation of the system will be absorbed.

4. A system according to Claim 1 for the exploitation of high level thermal energy intended for heating a primary fluid in a heating installation, dispersed in a boiler heated by a noble energy such as that released by combustion of a solid, liquid or gaseous fuel or even by electrical energy, characterised in that the said boiler (CH) is used in the first place to provide for heating of the outer surface of the aforesaid second evaporation panel of the said evaporator-separators (ES) of which the second condensation panel (209, 217) is bought into thermal contact with the fluid to be heated in the installation.

4. System according o Claim 4, characterised in that the fluid to be heated in the installation is likewise in thermal contact with the first condensation panel (219) of the evaporator-mixers (EM).

6. A system according to Claim 4 or Claim 5, characterised in that the thermal waste emanating from the said boiler (CH) after working in the said evaporator-separators (ES) is used for heating the primary exchange fluid (211, 213, 218).

7. A system according to one of Claims 4 to 6, characterised in that the said evporator-mixers (EM) are only used when the need for heat required for heating the said primary fluid is not satisfied by the said thermal waste, and the concentrated solutions (brines) formed and not used are stored (SC) with a view to being used at a later time.

8. A system according to one of Claims 4 to 7, characterised in that a plurality of evaporator-separators (ES) and a plurality of evaporator-mixers (EM) are disposed in a cascade arrangement, the primary fluid to be heated (211, 218) is in contact through an exchange wall (209, 217) with working solutions at a less high temperature produced at the final stage of the evaporator-separators (ES) in the plant and through another exchange wall (219) with the working solutions which are at a higher temperature and which are produced at the final stage of the evaporator-mixers (EM) of the plant.

9. A system according to Claim 8, characterised In that the said boiler (CH) is disposed in the centre of the installation and is surrounded over the greater part of its surface area by the first stage of evaporator-separators (ES) with which it is in a heat exchange relationship, the primary fluid to be heated surrounding the final stage of the said evaporator-separators (ES) with which it is in a heat exchange relationship, and the final stage of the said evaporator-mixers (EM) surrounds the said primary fluid with which it is in a heat exchange relationship, while the first stage of the said evaporator-mixers (EM) is surrounded by the fluid from the low-level heat source with which it is in a heat exchange relationship.

10. A system according to Claim 9, characterised in that the construction is generally circularly cylindrical.

EP 0 148 756 B1

FIG 1

FIG 2

FIG 3

FIG 4

1

FIG5

Q 50°C

ES

67

EM

Q 25°C

60

66

Q 80°C

64  63  62

55

61

FIG 6

Q2 25°C

S

78A

ES

EM

-I-

55°C

79

Q4

Q3

5°C

78

Q1 20°C

FIG 7

Q2 15°C

-I- N

EM ES

+35°C

Q4 Q3

82 -10°C

80

81B 81A

81

Q1 20°C

FIG 8

Q 60°C Q 25°C

ES

EM

55°C 85

60°C

83

5°C

Q3 Q4

85 84

Q 55°C Q 20°C

FIG 9   89 ─ [23°C]

ES

S 90   91   78A   EM   -I-  Q4

Q3
55°C   78B   5°C

78   88

93 ⊗   94   92   87 [18°C]

FIG 10

55°C   60°C
25°C   25°C
20°C   5°C
0°C

FIG 11   99 ─ [18°C]

EM   ES   81   100
+35°C  Q4
Q3
5°C   -10°C
82   81E   81A

95 ⊗   96 ⊗   97 ⊗ [23°C]  98

FIG 12

35°C   40°C
15°C   20°C
15°C
-10°C   -15°C

EP 0 148 756 B1

## FIG 13

9

FIG 14

FIG 15

## FIG 16

FIG 17

FIG 19

CH
1200°C
Qo

Qo/1200°C.

EC1  d  ES1  230°C
c

Qo/190°C

EC2  d  ES2
c

Qo/150°C

EC3  ES3

Qo/110°C

d  c

213  →  2Qo
110°C

Qo/110°C

EM1

Qo/80°C

EM2

Qo/50°C

EM3

Qo/20°C

20°C

218

CH

EM

221

ES

EM  ES

70°C  15°C

EM

221

ES

20°C

20°C

15

FIG·18